# EUROPEAN PATENT SPECIFICATION

(11) **EP 0 968 647 B1**
(45) Date of publication and mention of the grant of the patent: **18.04.2001**
(21) Application number: 99500013.0
(22) Date of filing: 29.01.1999
(51) Int. Cl.: A01K 39/02

(54) **A valve for drinkers**
Trinkventil
Soupape d'abreuvoir

(30) Priority: 30.06.1998 ES 9801728
(43) Date of publication of application: 05.01.2000
(73) Proprietor: TECNICA E INNOVACIONES GANADERAS, S.A. (TIGSA), E-08720 Vilafranca del Penedes Barcelona (ES)
(72) Inventor: Rovira Badia, Antonio, PO Box 307, 08720 Vilafranca del Penedes (ES); Franco Tarazaga, José, PO Box 307, 08720 Vilafranca del Penedes (ES)
(74) Representative: Pastells Teixido, Manuel

(56) References cited:
- EP-A- 0 554 884
- EP-A- 0 610 017
- GB-A- 1 152 819
- GB-A- 2 238 850

## Description

The present invention relates to a valve for drinkers.

These valves are mainly designed for drinkers for domestic poultry such as farm bred cocks, hens and chicks, said valves comprising a body to be vertically coupled to the horizontal water supply pipe, from said body projecting at the bottom a push by means of which the fowl actuates against an inner plugging ball on which is resting a bearing down element serving as a gauger for the flowing of the water to the drinker.

Said push is pushed laterally by the beak of the chicks and upwardly by the beak of the hens and cocks, said lateral or upward shift of the push rod facilitating the dripping outflow of the water which is thus directly received by the fowl with its beak, the water outflow being obtained thanks to the fact that the push pushes the plugging ball thereby separating it from the annular seat where it effects the plugging.

The problem with the valves with the above-mentioned push formed by a rod and a top head lies in the fact that if one wishes to increase the water flow rate to aid drinking in the case of the adult fowls by reducing the rod diameter so as to thus have more clearance at the bottom opening of the valve body the flow rate is then increased for the chicks even if these latter do laterally push the push rod, and therefore, since the chick is not able to swallow all the outflowing water there is a dripping of water onto the floor which determines the formation of puddles below the valves, with the consequent drawbacks.

See e.g. document EP-A-610017.

The valve being the object of this invention allows to obtain by means of the lateral actuation against the push rod a flow rate that is sensibly different from that obtained by means of the upward actuation of said push rod, a flow rate being obtained which is much bigger than that obtained with the conventional push when pushing it upwards, and the flow rate being even reduced when said rod is pushed laterally.

This advantage is obtained by using a special gauging, bearing down element, whereby said element is tubular in at least its bottom half whose hollow communicates with the outer surface of said element by means of at least one orifice, the lower end of this element which is in contact with the plugging ball having passages through which the water penetrating said element through said orifice will flow.

Document GB-A-1152819 discloses a valve according to the preamble of the main claim.

Thereby a smaller flow rate is obtained when as the chick pecks laterally at the push the ball-gauging element assembly is only slightly lifted whereupon the water flowing out at the bottom of the drinker is only that passing between the outer periphery of said element and the top opening of the valve body. Nevertheless, when the push is axially pushed upwards by the cock or hen the orifice of the gauging element is then lifted above the top opening of the valve body, thereby penetrating through said orifice the water that will be added to that already passing between the gauging element and said top opening, the water flow rate exiting the drinker at the bottom being hence increased.

With this special gauging, bearing down element can cooperate for the control of the water flow rate a bottom push whose rod has a double diameter such that the top portion of the rod is the bigger diameter portion, in such a way that this portion coincides with the bottom opening of the valve body when the valve is closed and when the push is being laterally actuated thus reducing the flow rate, whereas when the push has been lifted it is the smaller diameter portion of the push rod the portion of the latter that coincides with said bottom opening thus increasing the flow rate of the water flowing down the drinker.

These and other characteristics will be best made apparent by the following detailed description whose understanding will be made easier by the accompanying sheet of drawings showing a practical embodiment cited only by way of an example which does not limit the scope of the present invention.

In the drawings:

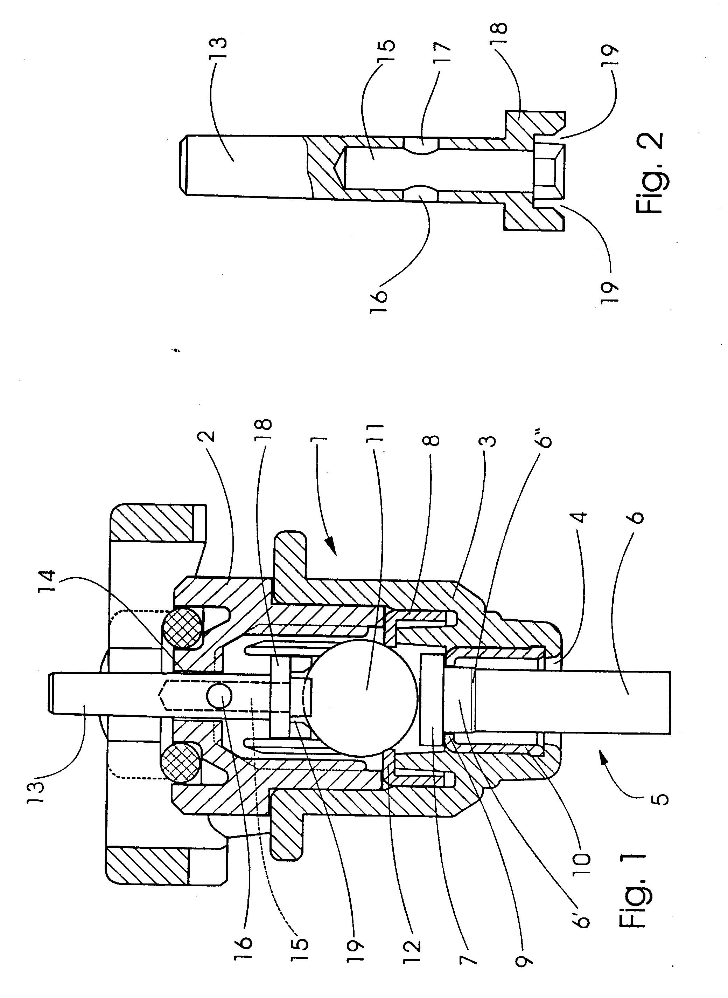

Fig. 1 represents this valve for drinkers as viewed in a sectional elevation and in the passive or closed position,
Fig. 2 illustrates in a part-sectional elevation the gauging, bearing down element as seen when turned 90° with respect to its arrangement in Fig. 1, and
Figs. 3 and 4 show said valve with the laterally or upwardly actuated push, respectively, to let the water flow down with a smaller or bigger flow rate.

According to the drawings the valve for drinkers comprises a body 1 formed by a top part 2 and a bottom part 3 that has the bottom passage 4 for the water outflow and in which is arranged push 5 formed by a rod 6 and a cylindrical head 7 that rests on the top opening of said bottom passage forming a shoulder 8, said opening being formed by the top edge 9 which is bent inwardly and belongs to a metal bushing 10 embedded in said bottom passage 4.

On the head 7 of the push there is a metal plugging ball 11 that fits upon a metal ring 12, said ball bearing an axial bearing down element 13 acting as a gauger for the water flow through the top opening 14 of the valve body and as a filter for the particles possibly carried by the water.

This bearing down and gauging element 13 has a tubular bottom half whose hollow 15 communicates with the outer surface of said element by means of two diametrically opposed orifices 16 and 17, the lower end of said element having an enlarged portion 18 radially comprising passages 19 through which the water penetrating said element through said orifices 16 and 17 will flow.

Push rod 6 will advantageously have a double diameter, the top portion 6' of the rod being the bigger diameter portion, the transition from said diameter to the rest of the rod with a smaller diameter being carried out with a small tapered portion 6".

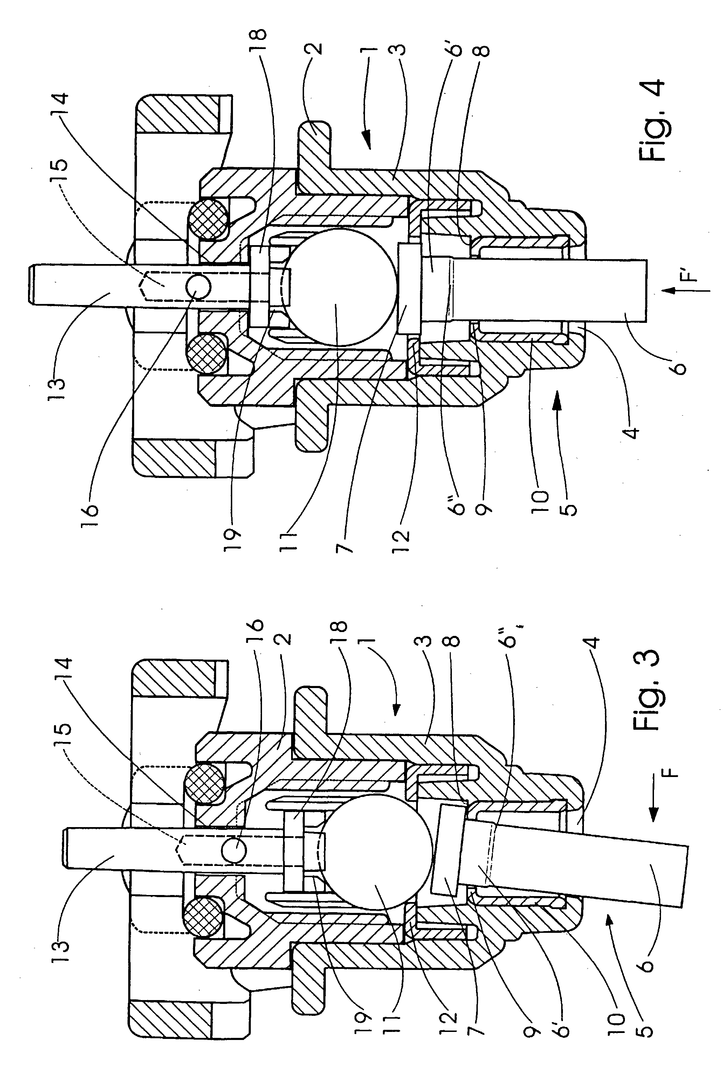

In Fig. 3 arrow F indicates the lateral actuation by the chick against push rod 6 determining the water downflow with a small flow rate, this water being that passing between element 13 and top opening 14 of valve body 1 and between portion 6' of the push and top opening 8 of bottom passage 4 of the drinker. In Fig. 4 arrow F' indicates the upwardly pushing actuation of rod 6 by an adult fowl, in which case the samaller diameter of said rod will coincide with said opening 8, and this together with the water flowing in through orifices 16 and 17 of element 13 and flowing out of its bottom and that passing between said element and top opening 14 of the drinker determines the downflow of a bigger water flow rate. In this case the drinker battery is usually installed at an elevated position with respect to the floor, so as to thus force the fowl to upwardly peck at the push.

It will be readily understood that this valve can be installed in any other type of drinker with a structure different from that illustrated, for example with the drinker body formed by one only part.

## Claims

1. A valve for drinkers comprising a body (1) from which projects at the bottom a push (5) allowing to actuate against an inner plugging ball (11) on which rests a water flow gauging, bearing down element (13), whereby the gauging element (13) is tubular in at least its bottom half whose hollow (15) communicates with the outer surface of said element by means of at least one orifice (16), characterized in that the lower end of said element (13) which is in contact with the plugging ball (11) has passages (19) through which the water penetrating said element (13) through said orifice (16) will flow.

2. A valve for drinkers as per claim 1, characterized in that push (5) formed by a rod (6) with head (7) has a double diameter such that the top portion of rod (6) is the bigger diameter portion (6').

## Patentansprüche

1. Ventil für Tränken, bestehend aus einem Gehäuse (1), an dessen Boden ein Stößel (5) hervorsteht, mit dessen Hilfe gegen eine innere Verschlußkugel (11) gedrückt werden kann, die auf einem den Wasserfluß messenden, nach unten sinkendem Element (13) ruht, wobei das Meßelement (13) zumindest an seiner unteren Hälfte, deren Hohlraum (15) mit der Außenfläche dieses Elements über mindestens eine Öffnung (16) in Verbindung steht, rohrförmig ausgebildet ist, dadurch gekennzeichnet, daß das untere Ende dieses Elements (13), das mit der Verschlußkugel (11) in Berührung steht, Durchgänge (19) aufweist, durch die das über die Öffnung (16) in dieses Element (13) eindringende Wasser fließt.

2. Ventil für Tränken gemäß Anspruch 1, dadurch gekennzeichnet, daß der als Stange (6) mit Kopf (7) ausgebildete Stößel (5) einen doppelten Durchmesser aufweist, so daß der obere Teil der Stange (6) den Abschnitt (6') mit dem größeren Durchmesser darstellt.

## Revendications

1. Vanne pour abreuvoir se composant d'un corps (1) d'où dépasse à la partie inférieure un poussoir (5) permettant d'agir sur une bille d'obturation interne (11), sur laquelle repose un élément pesant (13) destiné au réglage du débit d'eau et duquel au moins la partie inférieure de cet élément de réglage (13) est tubulaire , dont la partie creuse (15) communique avec la surface extérieure de cet élément à travers au moins un orifice (16), caractérisée par le fait que l'extrémité inférieure de l'élément (13), en contact ave la bille d'obturation (11), présente des passages (19) par lesquels s'écoulera l'eau qui entre dans cet élément (13) par l'orifice indiqué (16).

2. Vanne pour abreuvoir conformément à la revendication 1, caractérisée par le fait que le diamètre du poussoir (5) qui se compose d'un piston (6) à tête (7) est double, de telle sorte que la partie supérieure du piston (6) constitue le tronçon de plus grand diamètre (6').
